Europäisches Patentamt

European Patent Office

Office européen des brevets

(11) Publication number: **0 210 108 B1**

# EUROPEAN PATENT SPECIFICATION

(45) Date of publication of patent specification: **23.10.91**  (51) Int. Cl.⁵: **B29C 47/86**, B29C 47/28

(21) Application number: **86401611.8**

(22) Date of filing: **18.07.86**

The file contains technical information submitted
after the application was filed and not included in
this specification

(54) **Method for production of cylindrical thermoplastic resin film having rough inner surface and apparatus thereof.**

(30) Priority: **19.07.85 JP 159415/85**

(43) Date of publication of application:
**28.01.87 Bulletin 87/05**

(45) Publication of the grant of the patent:
**23.10.91 Bulletin 91/43**

(84) Designated Contracting States:
**BE DE FR GB SE**

(56) References cited:

| AU-B- 230 105 | DE-A- 2 162 261 |
| FR-A- 1 479 973 | FR-A- 2 018 008 |
| GB-A- 1 157 245 | JP-A-50 055 672 |
| JP-A-55 042 802 | US-A- 2 876 497 |

(73) Proprietor: **TERUMO KABUSHIKI KAISHA trading as TERUMO CORPORATION**
**44-1, 2-chome, Hatagaya Shibuya-Ku**
**Tokyo 151(JP)**

(72) Inventor: **Ohachi, Yoshinori**
**936, Yodohira-cho Fujinomiya-shi**
**Shizuoka-ken(JP)**
Inventor: **Sakakiyama, Shoji**
**200-1 Iwamoto Fuji-shi**
**Shizuoka-ken(JP)**

(74) Representative: **Descourtieux, Philippe et al**
**CABINET BEAU de LOMENIE 55 rue**
**d'Amsterdam**
**F-75008 Paris(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method for the production of a cylindrical thermoplastic resin film having a rough inner surface and an apparatus for carrying out the method.

Flexible vinyl chloride resin excels in workability, physiological stability, transparency and low price. Owing to these features, it has found extensive utility as the raw material for such medical implements as blood bags, transfusion fluid bags, and dialyzing fluid bags, for example.

Medical implements made of flexible vinyl chloride resin, however, entail the so-called phenomenon of blocking between the opposed inner surfaces of such medical implements (the phenomenon of mutual adhesion of opposed materials caused at a temperature below the melting point of the material of which the medical implements are made). Once this phenomenon occurs, the mouths of the medical implements are opened with difficulty, rendering the introduction of medicines and blood into the medical implements inconvenient.

As means of preventing the flexible vinyl chloride resin film from blocking, it has been proposed to adopt, in the fabrication of the flexible vinyl chloride resin film, a method which comprises embossing the surfaces of a backup roll and an accompanying roll both annexed to a sheet takeup machine thereby conferring embosses upon one surface of a film sheet being molded. This method requires use of an expensive embossing roll. Since the rough surface of the roll is flattened and smoothened through a protracted use, the embossing roll will eventually be incapable of conferring a uniformly rough surface to the sheet.

Inflation molding method is based on a procedure which generally comprises extruding a thermoplastic resin in the shape of a pipe by the extrusion molding technique, blowing air into the pipe while the extruded resin is still kept at a temperature exceeding the softening point thereof thereby allowing the pipe of resin to assume a shape of a desired size, subsequently suddenly cooling the film to a temperature below the softening point and thereby setting the film, folding the pipe of film into two tightly superposed plies with a pinch roll, and winding the folded pipe of film on a takeup roll. The sheet produced by the inflation molding method generally has a specular surface each on the inside and ouside thereof. When the pipe of film is crushed with the pinch roll, therefore, the blocking occurs between the opposed inner surfaces of the crushed pipe. As means of precluding this blocking, methods for cooling a mandrel part inside a die have been proposed (Japanese Patent Laid-open SHO 55(1980)-42,802 and SHO 50(1975)-55,672). When thermoplastic resin, particularly flexible vinyl chloride resin, is molded by the inflation molding method using a die constructed as proposed by these references, since the inner and outer surfaces of the pipe of film are flat and smooth, it is not possible to form a uniformly rough surface on the inside thereof. If the formation of such a uniformly rough surface on the inside is obtained to a certain extent, the roughness of the surface obtained at all is not sufficient for preventing the blocking from occurring between the opposed inner surfaces. A similar process of melt extruding plastic film is described in US Patent N° 2 876 497 "Alexander et al", in which both the inner and outer die lips defining a pipe extrusion orifice are kept at a higher temperature than the resin stock, although one of the lips can be colder than the other to obtain a matte finish on a surface.

An object of this invention, therefore, is to provide a method for the production of a novel cylindrical thermoplastic film having a rough inner surface and an apparatus for working this method. Another object of this invention is to provide a method for the production of a sheet of flexible vinyl chloride resin adapted to prevent the blocking from occurring between the opposed inner surfaces thereof and intended for use in medical implements and an apparatus for working the method.

The above-mentioned objects are accomplished by a method for the production of a cylindrical thermoplastic resin film having a rough inner surface by means of a die including a mandrel having first and second ends and an external die ring encircling said mandrel so far as to define an annular resin conduit therebetween which terminates adjacent said second end of the mandrel in a resin discharge outlet, comprising the steps of creating a temperature difference between at least a portion of the surface of the mandrel and the surface of said external die ring in facing relation to said mandrel surface; feeding molten thermoplastic resin through said annular resin conduit and said resin discharge outlet, thereby forming a cylindrical resin flow; during said step of feeding molten resin, causing the interior of the discharged cylindrical resin to retain air therein, so as to mould said thermoplastic resin film in a cylindrical shape; characterized in that : air is made to flow through an air passage defined centrally through the mandrel, from an inlet at said first end to an air discharge outlet at said second end; said temperature difference is obtained by feeding a coolant from an inlet at said first end to a coolant distributing means for cooling a portion of said mandrel adjacent to said second end, said coolant passage being defined adjacent to said air passage along at least a portion of the length thereof, said coolant distributing means having an uppermost end not more than 30 mm from said resin discharge outlet; said coolant is fed during said step of feeding molten thermoplastic resin so as to maintain said cooled portion of the surface of the mandrel where said temperature difference is created at a temperature level that is : (i) 5 to 60°C lower than the temperature of the said surface of said external die ring in facing relation to said mandrel surface, and (ii) inferior to the temperature of said molten resin, so that only the interior surface of the extruded resin film is suddenly cooled immediately before the resin is discharged from the resin discharge outlet, such that turbulence occurs only in the inner surface of the molten resin at the time of discharge, thus forming a rough inner surface including uniform fine rises and falls.

Further, this invention concerns a method for the production of a cylindrical thermoplastic resin film, characterized by having a temperature difference between the mandrel and the external die ring in the range of 10° to 50°C, preferably 15° to 35°C.

The above-mentioned objects are further accomplished by an apparatus for the production of a cylindrical thermoplasitc resin film having a rough inner surface comprising : a die including a mandrel having a first end and a second end and an external die ring encircling said mandrel so as to define an annular resin conduit therebetween which terminates adjacent said second end of the mandrel in a resin discharge outlet, said mandrel having an air discharge passage defined centrally therethrough so as to extend from an inlet at said first end to an air discharge outlet at said second end characterized in that said apparatus is provided with a coolant distributing means, depending from an inlet at said first end and a coolant passage defined adjacent to said air passage along at least a portion of the length thereof, said coolant distributing means having an uppermost end spaced not more than 30 mm from said resin discharge outlet so that only the interior surface of the extruded resin film is suddenly cooled immediately before the resin is discharged from the resin discharge outlet thereby causing turbulence only in the inner surface of the molten resin at the time of discharge thus forming a rough surface including uniform fine rises and falls.

This invention also concerns an apparatus for the production of a cylindrical thermoplastic resin film having a rough inner surface, wherein the cooling means comprises a coolant conduit annularly formed near at least the outer surface part of the mandrel along the resin discharge outlet and a coolant allowed to flow therethrough. This invention also concerns an apparatus for the production of an annular thermoplastic resin film having a rough inner surface, wherein the coolant conduit is formed near the outer surface part of the mandrel having a surface flush with the resin discharge outlet. This invention further concerns an apparatus for the production of a cylindrical thermoplastic resin film having a rough inner surface, wherein the coolant conduit is formed near the surface part of the mandrel protruding from the outer surface of the resin discharge outlet. Further the present invention concerns an apparatus for the production of an annular thermoplastic resin film having a rough inner surface, wherein the coolant conduit is formed at a position falling inside the mandrel protruding from the outer surface of the resin discharge outlet and, at the same time falling substantially flush with the outer surface of the external die ring.

Figs. 1 through 5 are cross sections schematically illustrating dies for working the method of this invention,

Fig. 6 is a cross section taken through Fig. 5 along the line VI-VI,

Fig. 7 is a schematic diagram illustrating a molding machine using a die of the present invention, and

Fig. 8 is a cross section schematically illustrating a die to be used in the conventional inflation molding method.

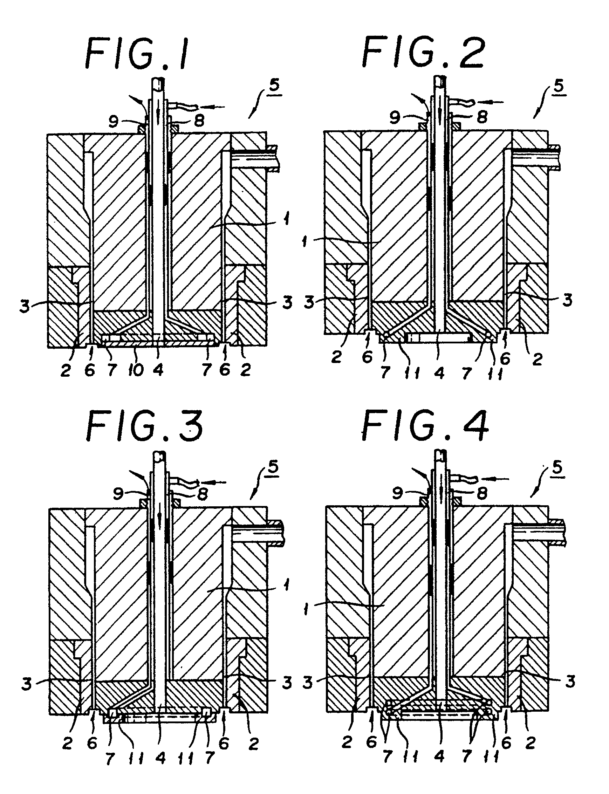

Now, the present invention will be described more specifically below with reference to the accompanying drawings. As illustrated in Fig. 1, a die 5 is composed of a mandrel 1 of circular cross section, an external die ring 2 adapted for adjustment of the wall thickness of a resin film and set around the outer periphery of the mandrel 1, and an annular resin conduit 3 formed in the gap intervening between the mandrel 1 and the external die ring 2 and is provided in the central portion of the mandrel 1 with an air discharge outlet 4 and further provided with a coolant conduit 7 formed annularly along the resin discharge outlet 6 near the outer surface portion of the mandrel 1 falling on the inside of the resin discharge outlet 6 of the die 5 communicating with the resin conduit 3. By the use of this die, the thermoplastic resin is subjected to inflation molding. The term "annular" as used herein embraces not merely true annular shapes but also elliptically annular shapes of varying ratios of ellipsis. In this case, the coolant conduit 7 is formed near the outer surface portion of the mandrel 1 falling on the inside of the resin discharge outlet 6 (which is actually sunken to a depth of not more than 1 mm) possessing a surface substantialy flush with the outer surface of the external die ring 2 lying outside the resin discharge outlet 6. This coolant conduit 7 communicates with a coolant inlet 8 and a coolant outlet 9. It is necessary that this coolant conduit 7 formed along the resin discharge outlet 6. It is permissible, however, for the coolant conduit 7 to be formed as spiralled toward the central part or wound spirally in two or three circles along the resin conduit 3 or to be formed in some other shape. Various methods are available for the formation of this coolant conduit 7. For example, the coolant conduit 7 can be formed by having a groove of a prescribed shape incised in the mandrel 1 in advance, covering the groove with a lid 10, and fixing the lid 10 as by welding or bolting (not shown).

Fig. 2 illustrates another typical die usable in working the method of this invention. In the die 5 similarly to the die of Fig. 1, the outer surface of the mandrel 1 falling inside the resin discharge outlet protrudes from the outer surface of the external die ring 2. It is in this protruding part 11 that the coolant conduit 7 is formed. In Fig. 2, the reference numerals which have their equivalents in Fig. 1 denote identical parts.

Fig. 3 illustrates yet another typical die to be used in working the method of this invention. In this die 5 similarly to that of Fig. 2, the outer surface of the mandrel 1 protrudes from the outer surface of the external die ring 2. At the position of the protruding part 11 falling substantially flush with the outer surface of the external die ring 2, the coolant conduit 7 is formed. In this case, various methods are available for the formation of this coolant conduit 7. For example, a groove of a prescribed shape is incised in the mandrel 1 and an annular lid having a groove of the identical shape incised therein in advance is placed over the former groove in such a manner that the two grooves will exactly match with each other and fixed in position as by bolting (not shown). In Fig. 3, the reference numerals which have their equals in Fig. 1 denote identical parts.

Fig. 4 illustrates still another typical die to be used in working the method of this invention. In the die 5 similarly to the die of Fig. 2, the outer surface of the mandrel 1 protrudes from the outer surface of the external die ring 2. It is in the protruding part 11 and the mandrel 1 that the coolant conduit 7 is formed in a spiral pattern. In Fig. 4, the reference numerals which have their equals in Fig. 1 denote identical parts.

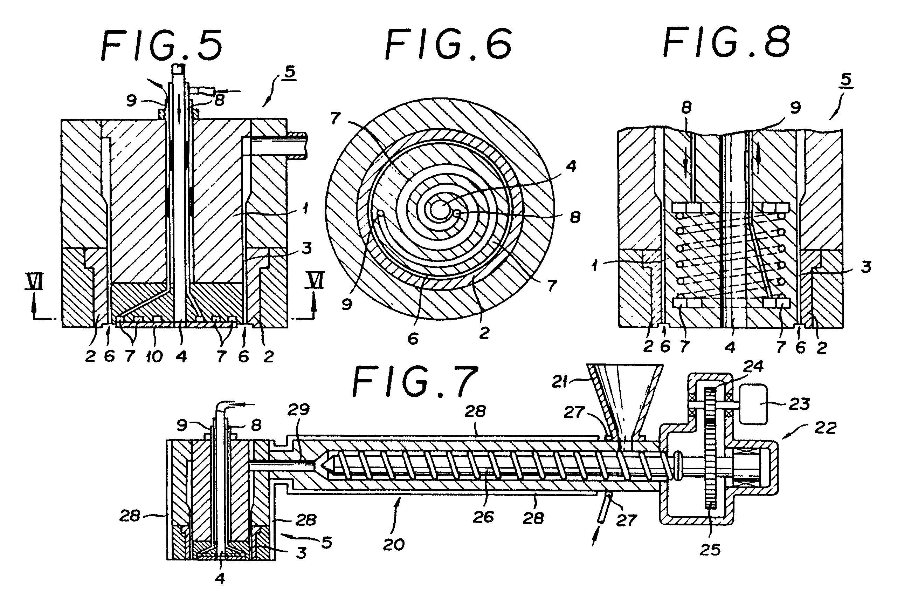

Figs. 5 and 6 illustrate further typical dies to be used in working the method of this invention. In the dies similarly to the die of Fig. 1, spiral coolant conduits 7 are formed near the outer surface portion of the mandrel 1. In Fig. 5, the reference numerals which have their equals in Fig. 1 denote identical parts.

In any case, the distance from the upper end part of the coolant conduit 7 to the outer surface of the mandrel 1 is not more than 30 mm, more desirably not more than 20 mm, and most desirably not more than 15 mm.

For the die of the foregoing description to be used in inflation molding thermoplastic resin, there is adopted an inflation molding machine which comprises a cylinder part 20, a drive part 22, a raw material feeding part 21 , and a die 5 disposed at one end of the cylinder part 20. In the inflation molding machine of Fig. 7, a given raw material is fed through the raw material feeding part 21, the motive power supplied from a motive power source (for example, motor) 23 in the driving part 22 is transmitted to a main shaft 26 via the mechanism of a motive power transmittance (for example, cogwheel 24, 25) and the screw shaft arranged between said main shaft 26 and the cylinder part 20 co-axially is rotated by the rotational power. The resin of raw material fed through the raw material feeding part 21 is cooled by a cooling means 27 for the purpose of preventing the resin of raw material to be fed into the cylinder part 20 in the same molten state as near the feeding part of said resin. In other parts, the resin is heated at a prescribed temperature by a heating means (for example, electric heater, heat medium etc.), molten, then forwarded to an extremepoint by the action of the screw shaft 27 and fed via a nozzle part 29 to the die 5. Within the die 5, the molten thermoplastic resin is allowed to flow through the resin conduit 3. In the meantime, a coolant is introduced through the coolant inlet 8 into the coolant conduit 7 to cool selectively the outer surface of the mandrel on the inner side of the resin discharge outlet. At the same time, the molten thermoplastic resin is cylindrically discharged through the resin discharge outlet 6. Before the cylindrical (tubular) thermoplastic resin discharged as described above is solidified, air is supplied through the air discharge outlet 4 to retain air inside the cylindrical resin. The expression "air is retained" as used herein means that a prescribed amount of air is placed inside the annular resin so that the resin immediately after departure from the discharge outlet will be prevented from being crushed and the opposed inner surfaces thereof from being forced into mutual contact. In accordance with the present invention, since the thermoplastic resin in the molten state is not substantially cooled within the resin conduit and since only the part of the molten resin corresponding to the inner surface is suddenly cooled immediately before the resin is discharged from the resin discharge outlet, turbulence occurs only in the inner surface of the molten resin at the time of discharge and a rough surface possessing uniform fine rises and falls is consequently formed. In this case, particularly desirable results are obtained by keeping the cooling temperature of the inner surface at the position within 30 mm, desirably within 20 mm, and especially within 15 mm in the axial direction from the lower end of the resin discharge outlet at a level $5°$ to $60°$ C, desirably $10°$ to $50°$ C, and most desirably $15°$ to $35°$ C lower than the outer temperature.

In the case of flexible vinyl chloride resin, for example ,a cylindrical film having a specular outer surface and a rough inner surface containing uniform fine rises and falls is obtained by controlling the temperature of the external die ring 2 in the range of 150° to 200°C and the temperature of the leading end of the mandrel in the range of 120° to 160°C, and discharging the molten resin while keeping only the inner surface portion cooled. If the temperature difference between the two sides of the die is less than 5°C, no sufficiently rough inner surface is formed. If the temperature difference exceeds 60°C, the temperature of the resin falls excessively and the turbulence occurs throughout the entire volume of the resin and the sheet is not produced uniformly.

The constructions allowable for the coolant conduit are not limited to those illustrated in Figs. 1-6. The coolant conduit can assume any construction so long as it enables to cool only the resin discharge outlet of the mandrel selectively. For example, it may be in the shape of a double or triple spiral. When the coolant conduit is formed in the shape of a spiral as described above, it is preferably arranged so that the coolant will move from the inner side of the mandrel toward the resin discharge outlet. By this arrangement, the uniformity of the temperature at the resin discharge outlet can be enhanced.

Amongst all the thermoplastic resins that are moldable by the method of this invention, flexible vinyl chloride resin proves to be most desirable. This does not necessarily mean that the method of this invention is limited to this particular resin. The method can be applied to any thermoplastic resin so long as the flow characteristic of the resin resembles that of the flexible vinyl chloride resin. Typical examples of the thermoplastic resin which answers this requirement include ethylene-vinyl acetate copolymer, polypropylene, olefinic thermoplastic elastomers, and chlorinated polyethylene. Examples of the coolant are silicone oil, air and the like.

Now this invention will be described more specifically below with reference to working examples.

Example 1

In an extrusion molding machine constructed as illustrated in Fig. 7, a die having the lower end of a coolant conduit 7 disposed at a position 10 mm apart from the leading end part of a mandrel 1 as illustrated in Fig. 1 was used. A melt (160°C) of flexible vinyl chloride resin composed of 100 parts by weight of vinyl chloride resin (polymerization degree 1,300), 50 parts by weight of di-2-ethylhexyl phthalate (DOP), 3 parts by weight of epoxidized soybean oil, 0.5 part by weight of a Zn-Ca metallic soap type stabilizer, and 0.5 part by weight of a lubricant was fed into the resin conduit and discharged through the resin discharge outlet 6 into the ambient air. The air discharged through the air discharge outlet 4 was retained inside the discharged tubular resin sheet. Consequently, there was obtained a tubular film 0.4 mm in thickness and 180 mm infolded diameter. Simultaneously, compressed air or silicone oil as a coolant was introduced at a high speed through a coolant inlet 8 into the coolant conduit 7 to cool only the resin discharge outlet of the mandrel to 135°C and then gas discharged from the system through the coolant discharge outlet 9. The film consequently obtained had a rough inner surface containing uniform fine rises and falls. The strap of this film was cut into pieces 300 mm in length. By sealing these pieces at a prescribed position, there were obtained bag-shaped medical implements.

The film was taken up at a rate of 5 m/min. (generally 0.5 to 20 m/min.). The coolant was compressed air and was fed at a rate of 80 liters/min. (generally 20 to 100 liters/min.). The L/D ratio of the screw in the cylinder 20 was 24. The compression ratio was 3.0. A Fulflight type screw was used inside the cylinder.

The bag-shaped medical implements obtained were examined to determine the condition of inner surface with respect to the phenomenon of blocking. The results are shown in Table 1. The condition of blocking observed was rated by the following 5-point scale. The medical implements were similarly tested for the phenomenon of blocking again after they had been sterilized in an autoclave.

0: Complete absence of blocking; a pinch at one end of a given sheet results in spontaneous opening of the mouth of the bag.

1: Occurrence of partial blocking; the blocking is not so serious as to prevent the mouth of the bag from being easily opened.

2: Occurrence of partial blocking; the blocking is so heavy as to prevent the mouth of the bag from being opened easily.

3: General blocking throughout the entire inner surface; the blocking is such that the mouth of the bag is not easily opened but the adhering opposed inner surfaces are spontaneously separated once the mouth of the bag is opened at all.

4: General blocking throughout the entire inner surface, the blocking is so heavy that the mouth of the bag is opened with difficulty and the adhering opposed inner surface remain intact even when the mouth of the bag is opened with much effort.

To test the bag-shaped medical implement for transparency, a given empty medical implement was filled with water and the absorbance of the medical implement at 700 to 400 nm (log $I_0/I$) was measured. In

5

all the samples used, the difference of absorbance in the spectra between 700 and 400 nm were not more than 0.05, denying dependency on absorbance upon wavelength. The results are shown in Table 1. The degree of transparency in terms of absorbance is as follows:

```
1.0 <          White and opaque
0.5 to 1.0     White and translucent
  < 0.5        Colorless and transparent
```

Example 2

A die having the lower end of the coolant conduit 7 disposed at a position 10 mm apart from the leading end of an annular projection 11 at the leading end part of the mandrel 1 as illustrated in Fig. 2 was used. Inflation molding was carried out by following the procedure of Example 1, except that the cooling (of the resin discharge outlet on the inside of the die at 130° C) was effected by using silicone oil (product of Toshiba Silicone Oil and marketed under product code of "TSF451") as a coolant. Consequently, there was obtained a film having a rough inner surface containing uniform fine rises and falls. When medical implements were made of this film similarly to those of Example 1 and examined with respect to the condition of blocking, the results were as shown in Table 1.

Examples 3-4

Inflation molding was carried out by following the procedure of Example 1, except that a die constructed as illustrated in Fig. 4 (the temperature of the resin discharge outlet on the inside of the die kept at 135° C). Consequently, there was obtained a film having a rough inner surface containing uniform fine rises and falls. When medical implements were made of this film similarly to those of Example 1 and examined with respect to the condition of blocking, the results were as shown in Table 1.

Control 1

A die having a coolant coduit spirally formed as illustrated in Fig. 8 so as to cool the entire peripheral surface in the axial direction of a mandrel substantially uniformly as disclosed in Japanese Patent Laid-open SHO 55(1980)-55,672 (using the same reference numerals as in Fig. 1 to denote the same component members) was used. When inflation molding was carried out using this die and following the procedure of Example 1, there was obtained a film having no embossed inner surface. When medical implements were made of this film similarly to those of Example 1 and examined with respect to the condition of blocking, the results were as shown in Table 1.

## Table 1

| Example | Immediately after molding | After sterilization in autoclave | Absorbance Empty | Filled with water |
|---|---|---|---|---|
| Example 1 | 0 | 1 | 0.80 | 0.21 |
| Example 2 | 0 | 1 | 0.87 | 0.23 |
| Example 3 | 0 | 1 | 0.82 | 0.21 |
| Example 4 | 0 | 1 | 0.85 | 0.22 |
| Control 1 | 4 | 4 | 0.27 | 0.20 |

Control 2

When inflation molding was carried out using the same die as in Control 1 and the same silicone oil as in Example 2, the produced resin sheet was heavily corrugated in the shape of bellows. The molten resin emanating from the outlet of the die had too weak strength to permit inflation molding.

As described above, this invention concerns a method for the production of a cylindrical thermoplastic resin film having a rough inner surface, characterized by preparing a die formed of a mandrel and an external die ring encircling the mandrel and provided therein with an annular resin conduit, feeding molten thermoplastic resin into the resin conduit, discharging the molten thermoplastic resin cylindrically through a resin discharge outlet of the aforementioned die communicating with the resin conduit while keeping the temperature of at least the portion of the surface of the mandrel separated by not more than 30 mm in the axial direction from the lower end of the resin discharge outlet and confronting the resin conduit at a level 5° to 60°C lower than the temperature of the surface of the external die ring confronting the resin conduit and, at the same time, allowing the interior of the discharged annular resin to retain air therein thereby molding the thermoplastic resin film in a cylindrical shape, and forming on the inside of the cylindrical film a rough surface possessing uniform fine rises and falls. Thus, a rough surface containing uniform fine rises and falls which has never been attained by the conventional inflation molding method can be easily formed on the inner surface of a film by the method of this invention.

Futher, since the film to be obtained by the method of this invention has a rough inner surface containing uniform fine rises and falls, it enjoys the advantage that opposed inner surfaces of the film in a tubular shape do not entail the phenomenon of blocking even when they are brought into mutual contact and a container made of the tubular film by joining the opposed inner surfaces exhibits extremely high transparency when a liquid is placed therein. Thus, the film to be formed by the method of this invention is highly useful as a material for fabricating medical implements such a blood bags, transfusion fluid bags, dialyzing fluid bags, and urine storing bags.

Further, this invention concerns an apparatus for the production of a cylindrical thermoplastic resin film having a rough inner surface, provided with a die comprising a mandrel, an external die ring encircling the mandrel, a cylindrical resin conduit formed between the mandrel and the external die ring, and a resin discharge outlet communicating with the resin conduit, which apparatus is characterized by being provided with cooling means which is adapted to keep the temperature of at least the portion of the surface of the mandrel of the die at a level lower than the temperature of the surface of the external die ring confronting the resin conduit and is disposed in the portion of the mandrel separated by not more than 30 mm in the axial direction from the resin discharge outlet toward the resin conduit. Thus, the molten resin being discharged through the resin discharge outlet can be suddenly cooled selectively on the inner side thereof during the aforementioned discharge out and, as the result, the resulting surface shrinkage of the resin enables only the inner surface of the resin to assume a rough surface containing uniform fine rises and falls.

## Claims

1. A method for the production of a cylindrical thermosplastic resin film having a rough inner surface by means of a die (5) including a mandrel (1) having first and second ends and an external die ring (2) encircling said mandrel so far as to define an annular resin conduit (3) therebetween which terminates adjacent said second end of the mandrel (1) in a resin discharge outlet (6), comprising the steps of :
   - creating a temperature difference between at least a portion of the surface of the mandrel (1) and the surface of said external die ring (2) in facing relation to said mandrel surface;
   - feeding molten thermoplastic resin through said annular resin conduit (3) and said resin discharge outlet (6), thereby forming a cylindrical resin flow;
   - during said step of feeding molten resin, causing the interior of the discharged cylindrical resin to retain air therein, so as to mould said thermoplastic resin film in a cylindrical shape;
   characterized in that :
   - air is made to flow through an air passage defined centrally through the mandrel, from an inlet at said first end to an air discharge outlet at said second end;
   - said temperature difference is obtained by feeding a coolant from an inlet (8) at said first end to a coolant distributing means (7, 10) for cooling a portion of said mandrel (1) adjacent to said second end, said coolant passage (7) being defined adjacent to said air passage along at least a portion of the length thereof, said coolant distributing means having an uppermost end not more than 30 mm from said resin discharge outlet (6);
   - said coolant is fed during said step of feeding molten thermoplastic resin so as to maintain said cooled portion of the surface of the mandrel (1) where said temperature difference is created at a temperature level that is: (i) 5 to 60°C lower than the temperature of the said surface of said external die ring (2) in facing relation to said mandrel surface, and (ii) inferior to the temperature of said molten resin, so that only the interior surface of the extruded resin film is suddenly cooled immediately before the resin is discharged from the resin discharge outlet (6), such that turbulence occurs only in the inner surface of the molten resin at the time of discharge, thus forming a rough inner surface including uniform fine rises and falls.

2. A method according to claim 1, wherein the temperature difference between said mandrel and said external die ring is in the range of 10° C to 50° C.

3. A method according to claim 1, wherein the distance from the upper end part of the said coolant conduit (7) to the outer surface of said mandrel is not more than 20 mm.

4. A method according to claim 1, wherein said thermoplastic resin is at least one member selected from the group consisting of flexible vinyl chloride resin, ethylenevinyl acetate copolymer, polypropylene, olefinic thermoplastic elastomers, and chlorinated polyethylene.

5. An apparatus for the production of a cylindrical thermoplastic resin film having a rough inner surface comprising :
   a die (5) including a mandrel (1) having a first end and a second end and an external die ring (2) encircling said mandrel so as to define an annular resin conduit therebetween which terminates adjacent said second end of the mandrel in a resin discharge outlet (6), said mandrel (1) having an air discharge passage defined centrally therethrough so as to extend from an inlet at said first end to an air discharge outlet (4) at said second end characterized in that said apparatus is provided with a coolant distributing means (7, 10), depending from an inlet (8) at said first end and a coolant passage defined adjacent to said air passage along at least a portion of the length thereof, said coolant distributing means having an uppermost end spaced not more than 30 mm from said resin discharge outlet (6) so that only the interior surface of the extruded resin film is suddenly cooled immediately before the resin is discharged from the resin discharge outlet thereby causing turbulence only in the inner surface of the molten resin at the time of discharge thus forming a rough surface including uniform fine rises and falls.

6. An apparatus according to claim 5, wherein said resin discharge outlet (6) is defined in an enlarged annular seat portion of said die adjacent to said second end of the mandrel.

7. An apparatus according to claim 5, wherein said coolant distributing means (7, 10) comprises an annular passage (7) defined circumferentially within said mandrel second end.

8. An apparatus according to claim 5, wherein said coolant conduit (7) is formed near the outer surface portion of said mandrel having a surface flush with the outer surface of said resin discharge outlet.

9. An apparatus according to claim 5, wherein said coolant conduit (7) is formed near the surface portion of said mandrel protruding from the outer surface of said resin discharge outlet.

10. An apparatus according to claim 5, wherein said coolant conduit (7) is formed at a position falling inside said mandrel protruding from the outer surface of said resin discharge outlet and, at the same time, falling substantially flush with the outer surface of said external die ring (2).

11. An apparatus according to claim 5, wherein the distance from the upper end part of said coolant conduit to the outer surface of said mandrel is not more than 20 mm.

**Revendications**

1. Procédé pour la production d'un film cylindrique de résine thermoplastique ayant une surface interne rugueuse au moyen d'une filière (5) comportant un mandrin (1) ayant des première et deuxième extrémités et une bague externe de filière (2) entourant ledit mandrin de manière à définir entre eux un conduit annulaire de résine (3) qui se termine en position adjacente à ladite deuxième extrémité du mandrin (1) par une sortie d'évacuation de résine (6), comprenant les étapes de :
   - créer une différence de température entre au moins une partie de la surface du mandrin (1) et la surface de ladite bague externe de filière (2) qui fait face à ladite surface du mandrin ;

- introduire une résine thermoplastique fondue dans ledit conduit annulaire de résine (3) et ladite sortie d'évacuation de résine (6) pour former ainsi un écoulement cylindrique de résine ;
- pendant ladite étape d'introduction de la résine fondue, amener l'intérieur de la résine cylindrique évacuée à contenir de l'air afin de mouler ledit film de résine thermoplastique sous forme cylindrique ;

caractérisé en ce que :

- de l'air est amené à circuler, par un passage d'air défini au centre du mandrin, depuis une entrée au niveau de ladite première extrémité jusqu'à une sortie d'évacuation d'air au niveau de ladite seconde extrémité ;
- ladite différence de température est obtenue en amenant un réfrigérant d'une entrée (8) au niveau de ladite première extrémité à un moyen de distribution de réfrigérant (7, 10) pour refroidir une partie dudit mandrin (1) adjacente à ladite deuxième extrémité, ledit passage de réfrigérant (7) étant défini en position adjacente audit passage d'air le long d'au moins une partie de sa longueur, ledit moyen de distribution de réfrigérant comportant une extrémité supérieure distante d'au plus 30 mm de ladite sortie d'évacuation de résine (6) ;
- ledit réfrigérant est introduit pendant ladite étape d'introduction de la résine thermoplastique fondue de manière à maintenir ladite partie refroidie de la surface du mandrin (1), où ladite différence de température est créée, à un niveau de température qui est : (i) inférieur de 5 à 60° C à la température de ladite surface de ladite bague externe de filière (2) qui fait face à ladite surface du mandrin, et (ii) inférieur à la température de ladite résine fondue, de manière que seule la surface interne du film de résine extrudée soit subitement refroidie immédiatement avant que la résine soit évacuée par la sortie d'évacuation de résine (6), pour que des turbulences apparaissent seulement dans la surface interne de la résine fondue au moment de l'évacuation, en formant ainsi une surface interne rugueuse comportant des bosses et des creux uniformes de petite taille.

2. Procédé selon la revendication 1, dans lequel la différence de température entre ledit mandrin et ladite bague externe de filière est dans la plage de 10 à 50° C.

3. Procédé selon la revendication 1, dans lequel la distance entre la partie d'extrémité supérieure dudit conduit de réfrigérant (7) et la surface externe dudit mandrin est d'au plus 20 mm.

4. Procédé selon la revendication 1, dans lequel ladite résine thermoplastique est au moins un élément choisi dans le groupe formé par une résine souple à base de chlorure de vinyle, un copolymère éthylène-acétate de vinyle, le polypropylène, les élastomères oléfiniques thermoplastiques et le polyéthylène chloré.

5. Appareil pour la production d'un film cylindrique de résine thermoplastique ayant une surface interne rugueuse, comprenant :

une filière (5) comportant un mandrin (1) ayant des première et seconde extrémités et une bague externe de filière (2) entourant ledit mandrin de manière à définir entre eux un conduit annulaire de résine qui se termine en position adjacente à ladite seconde extrémité du mandrin par une sortie d'évacuation de résine (6), un passage d'évacuation d'air étant défini au centre dudit mandrin (1) de manière à s'étendre depuis une entrée au niveau de ladite première extrémité jusqu'à une sortie d'évacuation d'air (4) au niveau de ladite seconde extrémité, caractérisé en ce que ledit appareil est muni d'un moyen de distribution de réfrigérant (7, 10), dépendant d'une entrée (8) au niveau de ladite première extrémité et d'un passage de réfrigérant défini en position adjacente audit passage d'air le long d'au moins une partie de sa longueur, ledit moyen de distribution de réfrigérant comportant une extrémité supérieure distante d'au plus 30 mm de ladite sortie d'évacuation de résine (6), de sorte que seule la surface interne du film de résine extrudée est subitement refroidie immédiatement avant que la résine soit évacuée de la sortie d'évacuation de résine pour que des turbulences apparaissent seulement dans la surface interne de la résine fondue au moment de l'évacuation en formant ainsi une surface interne rugueuse comportant des bosses et des creux uniformes de petite taille.

6. Appareil selon la revendication 5, dans lequel ladite sortie d'évacuation de résine (6) est définie dans une partie formant siège annulaire de ladite filière adjacente à ladite seconde extrémité du mandrin.

7. Appareil selon la revendication 5, dans lequel ledit moyen de distribution de réfrigérant (7, 10) comprend un passage annulaire (7) défini suivant la circonférence à l'intérieur de ladite second extrémité du mandrin.

8. Appareil selon la revendication 5, dans lequel ledit conduit de réfrigérant (7) est formé à proximité de la partie de surface externe dudit mandrin ayant une surface de niveau avec la surface externe de ladite sortie d'évacuation de résine.

9. Appareil selon la revendication 5, dans lequel ledit conduit de réfrigérant (7) est formé à proximité de la partie de surface dudit mandrin qui fait saillie de la surface externe de ladite sortie d'évacuation de résine.

10. Appareil selon la revendication 5, dans lequel ledit conduit de réfrigérant (7) est formé en une position située à l'intérieur dudit mandrin en saillie depuis la surface externe de ladite sortie d'évacuation de résine et située simultanément sensiblement de niveau avec la surface externe de ladite bague externe de filière (2).

11. Appareil selon la revendication 5, dans lequel la distance entre la partie d'extrémité Supérieure dudit conduit de réfrigérant et la surface externe dudit mandrin est d'au plus 20 mm.

## Patentansprüche

1. Verfahren zur Herstellung einer zylindrischen thermoplastischen Kunstharz- oder Kunststoffolie mit rauher Innenoberfläche mittels einer Spritzform (5), die einen Dorn (1) mit ersten und zweiten Enden sowie einer äußeren Spritzformring (2) aufweist, welcher den Dorn so weit umschließt, daß dazwischen eine ringförmige Kunstharz- oder Kunststoffleitung (3) festgelegt wird, die im Bereich des zweiten Endes des Dorns (1) in einem Kunststoff-Austragauslaß (6) endet, umfassend die folgenden Schritte:
   - Erzeugen einer Temperaturdifferenz zwischen mindestens einem Abschnitt der Oberfläche des Dorns (1) und der der Dornoberfläche gegenüberstehenden Oberfläche des äußeren Spritzformrings (2),
   - Zuspeisen von geschmolzenem thermoplastischem Kunstharz oder Kunststoff durch die ringförmige Kunststoffleitung (3) und den Kunststoff-Austragauslaß (6), um damit einen zylindrischen Kunststoffstrom zu erzeugen,
   - während des Schritts der Zuspeisung geschmolzenen Kunststoffs erfolgendes Einschließen von Luft im Inneren des ausgetragenen zylindrischen Kunststoffs, um die thermoplastische Kunststoffolie in eine zylindrische Form zu bringen,
   dadurch gekennzeichnet, daß
   - Luft durch einen Luftdurchgang, der zentral durch den Dorn (hindurch) festgelegt ist, von einem Einlaß am ersten Ende zu einem Luft-Austragauslaß am zweiten Ende zum Strömen gebracht wird,
   - die Temperaturdifferenz eingestellt wird durch Zuspeisen eines Kühlmittels von einem Einlaß (8) am ersten Ende zu einer Kühlmittelverteilereinrichtung (7, 10) zwecks Kühlung eines Abschnitts des Dorns (1) im Bereich des zweiten Endes, wobei der Kühlmitteldurchgang (7) im Bereich des Luftdurchgangs längs mindestens eines Teils von dessen Länge festgelegt ist und die Kühlmittelverteilereinrichtung ein oberstes Ende aufweist, das nicht mehr als 30 mm vom Kunststoff-Austragauslaß (6) angeordnet ist,
   - das Kühlmittel während des Schritts der Zuspeisung geschmolzenen Kunststoffs zugespeist wird, um den gekühlten Abschnitt der Oberfläche des Dorns (1) aufrechtzuerhalten, in welchem die Temperaturdifferenz auf einer Temperaturhöhe erzeugt wird, um die 1. um 5 - 60° C niedriger als die Temperatur der der Dornoberfläche gegenüberstehenden Oberfläche des äußeren Spritzformrings und 2. niedriger (inferior) als die Temperatur des geschmolzenen Kunststoffs ist, so daß nur die Innenoberfläche der extrudierten Kunststoffolie unmittelbar vor dem Austragen des Kunststoffs aus dem Kunststoff-Austragauslaß (6) plötzlich bzw. schlagartig (ab)gekühlt wird, derart, daß zum Zeitpunkt des Austragens Turbulenz nur in der Innenoberfläche des geschmolzenen Kunststoffs entsteht und damit eine rauhe Innenoberfläche mit gleichmäßigen feinen Erhebungen und Vertiefungen gebildet wird.

2. Verfahren nach Anspruch 1, dadurch gekennzeichnet, daß die Temperaturdifferenz zwischen dem Dorn und dem äußeren Spritzformring im Bereich von 10 - 50° C gehalten wird.

10

3. Verfahren nach Anspruch 1, dadurch gekennzeichnet, daß der Abstand von oberen Endteil der Kühlmittelleitung (7) zur Außenfläche des Dorns nicht mehr als 20 mm beträgt.

4. Verfahren nach Anspruch 1, dadurch gekennzeichnet, daß der Kunststoff mindestens ein Element aus der Gruppe flexibles Vinylchloridharz, Ethylen-Vinylacetat-Mischpolymerisat, Polypropylen, olefinische thermoplastische Elastomere und/oder chloriertes Polyethylen ist.

5. Vorrichtung zur Herstellung einer zylindrischen thermoplastischen Kunstharz- oder Kunststoffolie mit rauher Innenoberfläche, umfassend:
eine Spritzform (5) mit einem ein erstes und ein zweites Ende aufweisenden Dorn (1) und einem äußeren Spritzformring (2), welcher den Dorn so umschließt, daß dazwischen eine ringförmige Kunstharz- oder Kunststoffleitung festgelegt wird, die im Bereich des zweiten Endes des Dorns in einem Kunststoff-Austragauslaß (6) endet, wobei der Dorn (1) einen zentral durch ihn (hindurch) festgelegten Luftaustragdurchgang aufweist, der sich von einem Einlaß am ersten Ende zu einem Luftaustragauslaß (4) am zweiten Ende erstreckt, dadurch gekennzeichnet, daß die Vorrichtung mit einer Kühlmittelverteilereinrichtung (7, 10), die von einem Einlaß (8) am ersten Ende abgeht, und einem Kühlmitteldurchgang, der neben dem Luftdurchgang längs mindestens eines Teils von dessen Länge festgelegt ist, versehen ist, die Kühlmittelverteilereinrichtung ein oberes Ende aufweist, das nicht mehr als 30 mm vom Kunststoff-Austragauslaß (6) beabstandet ist, so daß nur die Innenoberfläche der extrudierten Kunststoffolie unmittelbar vor dem Austragen des Kunststoffs über den Kunststoff-Austragauslaß plötzlich bzw. schlagartig (ab)gekühlt wird, derart, daß zum Zeitpunkt des Austragens Turbulenz nur in der Innenoberfläche des geschmolzenen Kunststoffs entsteht und damit eine rauhe Oberfläche mit gleichmäßigen feinen Erhebungen und Vertiefungen gebildet wird.

6. Vorrichtung nach Anspruch 5, dadurch gekennzeichnet, daß der Kunststoff-Austragauslaß (6) in einem erweiterten ringförmigen Sitzabschnitt der Spritzform im Bereich des zweiten Endes des Dorns festgelegt ist.

7. Vorrichtung nach Anspruch 5, dadurch gekennzeichnet, daß die Kühlmittelverteilereinrichtung (7, 10) einen umfangsmäßig im zweiten Ende des Dorns festgelegten ringförmigen Durchgang (7) aufweist.

8. Vorrichtung nach Anspruch 5, dadurch gekennzeichnet, daß die Kühlmittelleitung (7) nahe des Außenflächenabschnitts des Dorns mit einer Oberfläche, die bündig mit der Außen(ober)fläche des Kunststoff-Austragauslasses abschließt, ausgebildet ist.

9. Vorrichtung nach Anspruch 5, dadurch gekennzeichnet, daß die Kühlmittelleitung (7) nahe des Oberflächenabschnitts des Dorns ausgebildet ist, der über die Außen(ober)fläche des Kunststoff-Austragauslasses vorsteht.

10. Vorrichtung nach Anspruch 5, dadurch gekennzeichnet, daß die Kühlmittelleitung (7) in einer Lage ausgebildet ist, die innerhalb des über die Außen(ober)fläche des Kunststoff-Austragauslasses vorstehenden Dorns liegt und gleichzeitig im wesentlichen bündig mit der Außen(ober)fläche des äußeren Spritzformrings (2) liegt bzw. abschließt.

11. Vorrichtung nach Anspruch 5, dadurch gekennzeichnet, daß der Abstand vom oberen Endteil der Kühlmittelleitung zur Außen(ober)fläche des Dorns nicht mehr als 20 mm beträgt.

# FIG.1

# FIG.2

# FIG.3

# FIG.4

FIG.8

FIG.6

FIG.5

FIG.7